# EUROPEAN PATENT SPECIFICATION

(11) **EP 2 572 548 B1**
(45) Date of publication and mention of the grant of the patent: **11.03.2015**
(21) Application number: 11723019.3
(22) Date of filing: 13.05.2011
(51) Int. Cl.: H04W 72/12, H04W 80/04, H04W 72/04, H04W 16/22

(54) **METHOD AND SYSTEM FOR NETWORK VIRTUALIZATION**
VERFAHREN UND SYSTEM ZUR NETZVIRTUALISIERUNG
PROCÉDÉ ET SYSTÈME DE VIRTUALISATION DE RÉSEAU

(30) Priority: 17.05.2010 IT MI20100874
(43) Date of publication of application: 27.03.2013
(73) Proprietor: Associazione Create-Net, 38123 Povo (Trento) (IT)
(72) Inventor: RIGGIO, Roberto, I-38123 Trento (IT); MIORANDI, Daniele, I-38123 Povo - Trento (IT); DORIGUZZI, Roberto, I-38049 Vataro - Trento (IT); SALVADORI, Elio, I-38121 Martignano - Trento (IT)
(74) Representative: Pallini Gervasi, Diego
(86) International application number: PCT/EP2011/057795
(87) International publication number: WO 2011/144538

(56) References cited:
- WO-A2-01/02935
- MAHINDRA R ET AL: "Space Versus Time Separation for Wireless Virtualization on an Indoor Grid", NEXT GENERATION INTERNET NETWORKS, 2008. NGI 2008, IEEE, PISCATAWAY, NJ, USA, 28 April 2008 (2008-04-28), pages 215-222, XP031248150, ISBN: 978-1-4244-1784-1 cited in the application
- KOHLER E ET AL: "The Click modular router", ACM TRANSACTIONS ON COMPUTER SYSTEMS, ACM, NEW YORK, NY, US, vol. 18, no. 3, 1 January 2000 (2000-01-01), pages 263-296, XP002208133, ISSN: 0734-2071, DOI: DOI:10.1145/354871.354874 cited in the application

## Description

### Field of the invention

The invention relates to the field of network virtualization

### Background of the invention

Network Virtualization is currently regarded as one of the most promising approaches to enable innovation in today's networks. Generally speaking, Network Virtualization can be seen as a fundamental tool for several applications:
- evaluating new, not necessarily backward compliant Internet architectures in large-scale realistic environments, thereby helping to overcome the current Internet ossification;
- changing the functional role and business model of Internet Service Providers by decoupling the provisioning of physical infrastructure from the provisioning of communication/computing resources. In such a way it allows the introduction of new players such as: Infrastructure Providers, Virtual Network Providers and Service Providers, eventually improving the competition in this sector;
- enabling the smooth and controlled introduction of novel services in an operational network by providing means to isolate them from already deployed applications, thereby promoting innovation in telecommunication networks;
- moving logical instances of nodes and services across an infrastructure in order to optimize network performance and minimize operational expenditures. As an example, moving services close to the users may lead to a decrease in the power consumption of a physical network, therefore contributing to a limitation of the network's carbon footprint.

Network Virtualization includes methods and techniques to effectively share a common physical network infrastructure, by splitting it into several logical network instances (generally referred to as "slices") composed virtual nodes ("slivers") and of virtual links [1,2]

Interactions between the logical network instances can be controlled by appropriate software or hardware components. Compared to the concept of "logical routers" developed today by vendors, in network virtualization virtual nodes in a slice are fully programmable to allow the instantiation of a network instance where novel architectures or services (potentially departing from legacy IP-based architectures) can be tested in a controlled environment before putting them in production.

Currently proposed network virtualization solutions are tipically tailored for wired networks composed of nodes with very large processing power and storage space (PlanetLab [3], VINI [4], G-Lab [5], etc). On the other hand, very few studies have been performed on resource-constrained environments in general, and multi-hop wireless networks in particular. Further, they have mainly focused on how different wireless medium virtualization techniques affect the overall network slices performance in term of isolation and stability [6, 7]. Such solutions are not suitable for use by a Wireless Internet Service Provider (WISP) that wants to allow production traffic to share part of the available network resources with a variable number of slices where innovative solutions can be tested in a severely controlled yet realistic environment. In such a scenario, production traffic must be assigned on one privileged slice where network resources like channel bandwidth and node processing are guaranteed to the detriment of other slices running experimental tests. The present invention provides a solution for these needs.

### Brief description of the drawings:

Fig. 1: Simplified deployment scenario of network virtualization
Fig. 2: Network-level configuration: an example with one production slice and one experimental slice sharing a common physical substrate.
Fig. 3a: Flow diagram illustrating the bandwidth partitioner operation principles.
Fig. 3b: Flow diagram illustrating the actual packet transmission procedure.
Fig. 4a-4d: Flow diagram illustrating steps of the software router for outgoing and incoming packets.
Fig. 5: Schematic representation of a network node supporting this invention's network virtualization scheme.
Fig. 6: Performance of three slices in a scenario with deterioration of wireless link quality conditions.

### Detailed description of the invention.

Network virtualization in wireless networks needs to address two additional major issues:
(i) how to isolate wireless resources belonging to network slices coexisting at the same time to ensure minimal interference among them, and
(ii) how to control wireless resource utilization to ensure that a slice does not infringe the resources of another slice.

These problems are solved by the method of claim 1 and by the system of claim 12.

Several techniques have been proposed to guarantee the isolation of wireless resources among concurrent slices[14]:
- SDM (Space Division Multiplexing), where physical wireless nodes are partitioned in space, forming separate sub-networks, thereby minimizing the interference among different slices.
- FDM (Frequency Division Multiplexing), where different slices are partitioned in the frequency domain by leveraging on the availability of multiple wireless interfaces on each network node.
- CDM (Code Division Multiplexing), similar to FDM, but assigning different codes to each slice.
- TDM (Time Division Multiplexing), whereby slices are partitioned in the time domain by assigning them a specific timeslot for their communication needs.

While studies regarding the feasibility of each of these approaches (or combinations thereof), with their pros and cons have been already provided in literature [6, 7], they fail to address the problem of an effective isolation between concurrent slices on a multi-hop wireless network through a finer control of wireless and node resources usage in the network: the present invention provides techniques and architectures to achieve this.

In particular, the present invention achieves a level of flexibility which none of the aforementioned techniques, used in a stand-alone fashion, can provide. Further, the present invention targets the provisioning of methods for ensuring that a privileged slice (typically the one carrying the production traffic) can have guaranteed resources while the ones devoted to experimental activities may share the remaining (possibly time-varying) network resources.

Hereafter, certain embodiments of the invention related to a novel virtualization framework specifically tailored to multi-hop wireless networks are introduced. Such networks are usually built using commodity components and are characterized by rather limited computing capabilities, in comparison to the traditional carrier-class networking equipment exploited in projects such as FEDERICA [8], AKARI [9] or GENI [10].

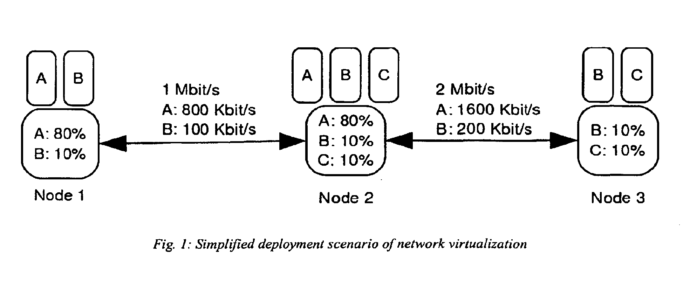

Most of the network virtualization architectures devised so far [8, 9, 10] aim at providing multiple isolated environments where experiments can be run in parallel over real-world networks. The present invention, on the other hand, provides wireless networks operators with a comprehensive virtualization solution where production traffic (i.e. the traffic generated by the end-users), shares part of the available network resources with a variable number of experimental slices where novel solutions, e.g. routing protocols, are being tested. Fig. 1 sketches a simplified setup where a network, composed of three nodes organized in a string topology, is running three distinct slices: one production slice (A), and two experimental slices (B and C). In this scenario, links are symmetric and their capacity is assumed to be time-invariant. Moreover, mesh routers are equipped with a single radio interface, however the present invention is also able to cope with asymmetric links with fluctuating capacity in multi-radio/multi-channel setups.

In this simplified scenario, the production slice A is assigned 80% of the resources in the network, while the two experimental slices equally share the remaining 20% of resources. The present architecture foresees a scenario where 5 to 10 slices share the overall network resources. Such limitation is mandated by the computing and storage constraints that characterized currently used wireless multi-hop networking devices, but may be enlarged in the future.

Traffic shaping is performed at each node in order to limit the amount of network resources used by each sliver. In this simplified setup the resources that each sliver can exploit are upper bounded by a fixed threshold derived from the relative performance goal given during the planning phase. As a result, slice A "sees" an 800 Kb/s bidirectional link between node 1 and node 2, while the available bandwidth between node 2 and node 3 is 1600 Kb/s. In this setup some bandwidth is voluntary left unused. However scenarios where a sliver can have full access to all the available bandwidth are also supported.

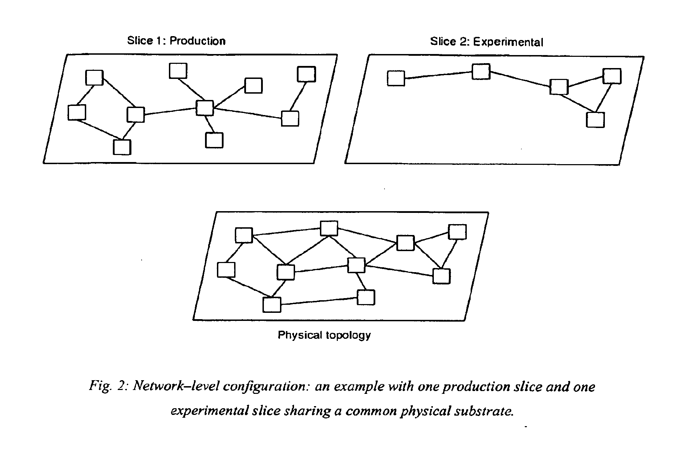

Fig.2 sketches a possible use case, where a production slice exploiting a stable version of a routing protocol is running in parallel with an experimental slice where novel routing strategies are being tested. In this scenario the Link Broker is used to expose two different connectivity graphs to the two available network slices (production and experimental). On the other hand, the Bandwidth Partitioner is used to redistribute the available link bandwidth among the competing slices, i.e. 80% of the overall network capacity to the production slice and 20% of the overall network capacity to the experimental slice. Please note that a minimum bandwidth, e.g. 1 Mb/s, can also be allocated to the production slice.

### Node Level Architecture.

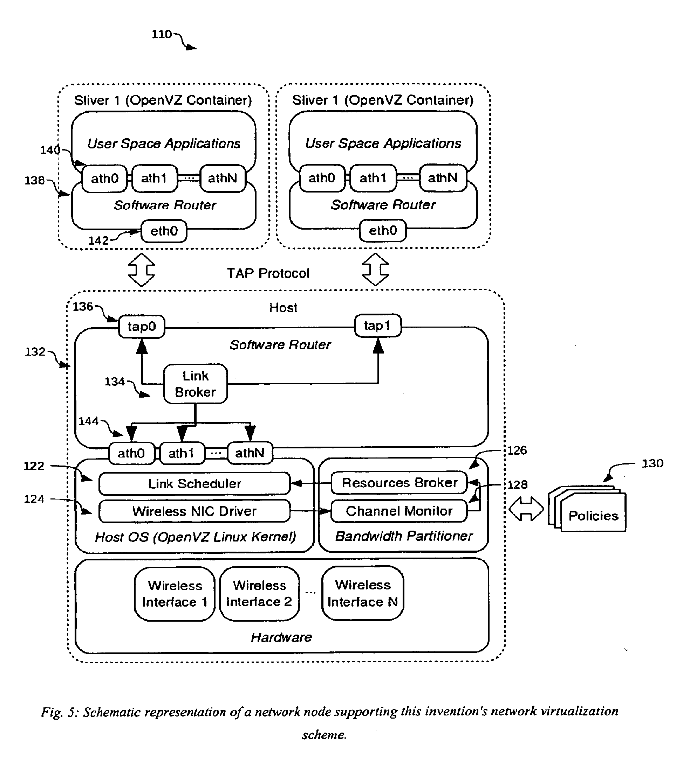

Hereafter the present invention node's architecture (see Fig. 5) is described in details. The present invention relies on a virtualization solution capable of providing performance isolation and resource management, such as OpenVZ [12]. Container-based virtualization solutions are preferred in that they provide reduced overhead and better performance. They also provide good performance isolation (in terms of CPU cycles, memory consumption, and storage), because processes running within a container do not significantly differ from processes running in the hosting system. The major drawback of container-based virtualization solutions is that, since a single kernel is used for every sliver, kernel modifications are not allowed.

Due to the latter limitation, one embodiment of the present invention uses a new wireless network virtualization stack in user-space, using a software router such as the Click modular router [13]. Albeit characterized by a higher overhead in comparison to pure kernel-level implementation, solutions based on a software router such as the Click modular router have the advantage of being highly customizable allowing to circumvent the flexibility limitations of typical container based solutions [14].

The software router is used both within each sliver (guest software router) and at the host operating system level (host software router). More specifically, the software router instance running within a sliver provides the guest environment with a set of virtual interfaces (ath0, ath1,..., athN) implemented as Linux TAP devices. A TAP device operates at layer 2 of the traditional ISO/OSI networking stack and simulates an Ethernet device.

User-space process, running within a sliver, can exploit the virtual interfaces to implement their routing strategy. Communication over the virtual interfaces can be done using two different frame formats:
- 802.3 headers (Ethernet). Used to expose a standard Ethernet interface.
- 802.11 headers.Used to expose a raw wireless interface. In this case the user-space applications must properly encapsulate their traffic using the radiotap header format. The radiotap header format is a mechanism to supply additional information about 802.11 frames, from the driver to user-space applications, and from a user-space application to the driver for transmission.

In either situation, outgoing traffic is encapsulated by the guest software router process and sent to the host software router process through the virtual interface eth0 provided by the virtual container. In case the user-space application is already using the radiotap header, no additional encapsulation is performed by the guest click process and the frame is delivered unchanged to the host operating system. The host software router process receives the incoming frame and dispatches it to the suitable device according to a set of policies maintained by the Link Broker and the Bandwidth Partitioner.

The Link Broker is a software module that can expose different connectivity graphs to the various slivers without requiring that the nodes must be physically separated (i.e., out of radio range). Connectivity graphs are defined on a per-slice basis allowing us to define a different topology for each slice. This is particularly useful to test novel routing strategies on a subset of the nodes. Moreover, if wireless routers are equipped with multiple radio interfaces, it is possible to create multiple slices (whose cardinality equals the number of radio interfaces) operating on orthogonal frequency bands, implementing therefore an FDM wireless network virtualisation solution. Hybrid solutions where only a subset of the slivers operates on orthogonal frequencies are also supported. Albeit network connectivity graphs are defined at deployment time, they can change during the network operations in order to create connectivity scenarios that simulate different operating conditions (i.e. link failures/outages).

### Link capacity Estimation.

Due to the use of a shared medium, estimating the capacity of a wireless link is not trivial. Interference coming from external sources, changes in the propagation characteristics or interference from the same signal travelling along different paths make the link's total capacity fluctuate over time. Even if we limit our attention on communications realized using the IEEE 802.11 facility of standards, an ideal estimator of the link capacity from an Access Point toward a generic Stations should take into account both the the data frame SNR (measured at the receiving station) and the ACK frame SNR (measured at the access point).

Such a level of precision is difficult to achieve without introducing additional signaling and/or modifying the standard IEEE 802.11 MAC operations.

In one embodiment the present invention uses an indirect way of assessing a link's total capacity based on the transmission rate adaptation-related functionalities already available in current IEEE 802.11 devices. In particular the algorithm collects statistics of all the packets that have been transmitted.

### Soft performance isolation

Soft-performance isolation between slivers is provided through a scheduler (such as Hierarchical Token Bucket (HTB) supported by the Linux kernels 2.6.x [15]) which can implement precise traffic shaping policies. HTB organizes traffic classes in a tree structure; each class is assigned an average rate (rate) and a maximum rate (ceil). Three class types exist: root, inner and leaf. A root class corresponds to a physical link; its bandwidth is the one currently available for transmission. Leaf classes, placed at the bottom of the hierarchy, correspond to a given type of traffic (e.g., TCP-controlled or VoIP etc.). Two internal token buckets are maintained for each class. Classes which have not exceeded their rate can unconditionally transmit; classes which have exceeded their allowed rate but not their upper limit (ceil) can transmit only borrowing unused bandwidth, if available, from other classes. In order to borrow bandwidth, a request is propagated upwards in the tree. A request that would exceed the ceil limit is terminated. A request that would satisfy the allowed rate is accepted. A request that would not satisfy the allowed rate constraint but the ceil one is propagated upwards until the procedure is completed.

Due to the stochastic nature of the wireless links capacity, an HTB scheduler alone is not able to deliver performance fairness among competing traffic flows in wireless networks. In order to address this problem in the present invention a bandwidth partitioner is introduced.

This Bandwidth Partitioner component exploits local channel statistics, gathered through the Wireless Network Interface Card (WNIC) driver, to estimate the currently available link bandwidth and to partition the bandwidth among the different slivers on the basis of a set of pre-defined policies. Such information is then passed to the Resources Broker which combines them with a set of user-defined policies in order to generate a configuration template for the scheduler, i.e. the HTB scheduler. The Resource Broker can be implemented in the form of a software or hardware running within each wireless router and periodically updates the scheduler configuration in order to reflect the actual channel capacity. The scheduler configuration is also updated if either a new slice is deployed over the network or if the policies have changed.

Hereafter the details of the various implementation of the bandwidth partitioning and rate adaptation of the present invention.

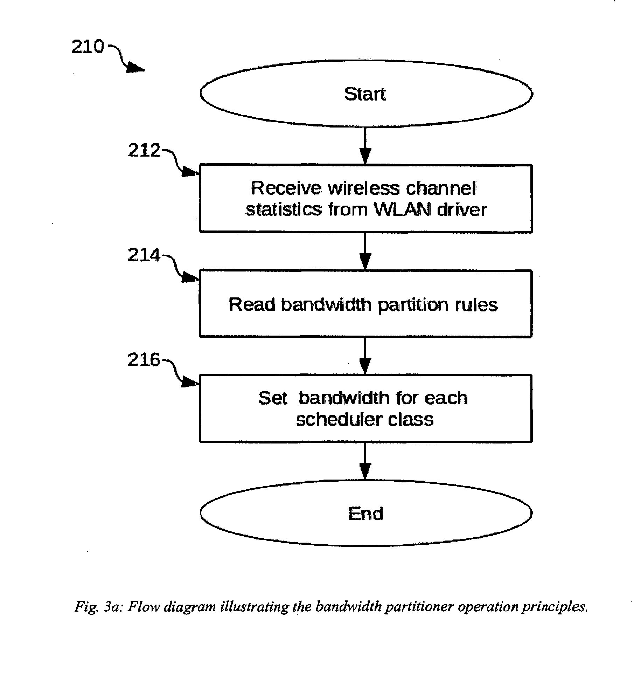

FIG. 3A is a flow diagram illustrating steps of the bandwidth partitioner operation (128 in FIG. 5). Referring to FIG. 3A, there is shown a flow diagram *210*. After start step, in step *212*, the channel monitor process may read the wireless channel statistics from wireless NIC 124 in FIG. 5 and, in step *216*, may update the bandwidth to be assigned to each class of the link scheduler 122 in FIG.5 on the basis of pre-defined policies 130 in FIG. 5. After step *216*, the process in the flow diagram *210* may proceed to end step. Process *210* may be repeated every a fixed or variable period of time.

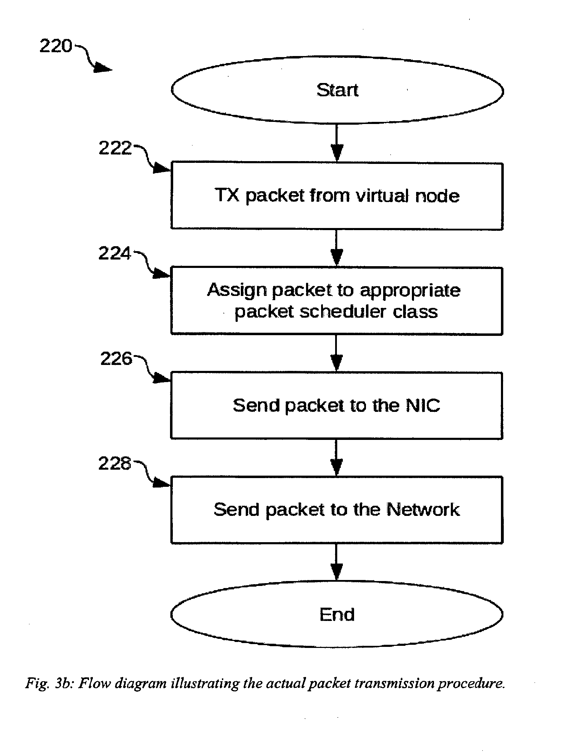

FIG. 3B is a flow diagram illustrating steps in the transmission of packets in accordance with an embodiment of the invention. Referring to FIG. 3B, there is shown a flow diagram *220*. After start step, in step *222*, when a transmission packet from a virtual node enters the transmission queue, in step *224* it may be assigned to the link scheduler class linked to the sending virtual node. Depending on the bandwidth assigned to the class by process *210*, in step *226* the packet may be sent to the Wireless NIC 124 in FIG. 5 and finally to the network in step *228*. After step *228*, the process in the flow diagram *220* may proceed to end step.

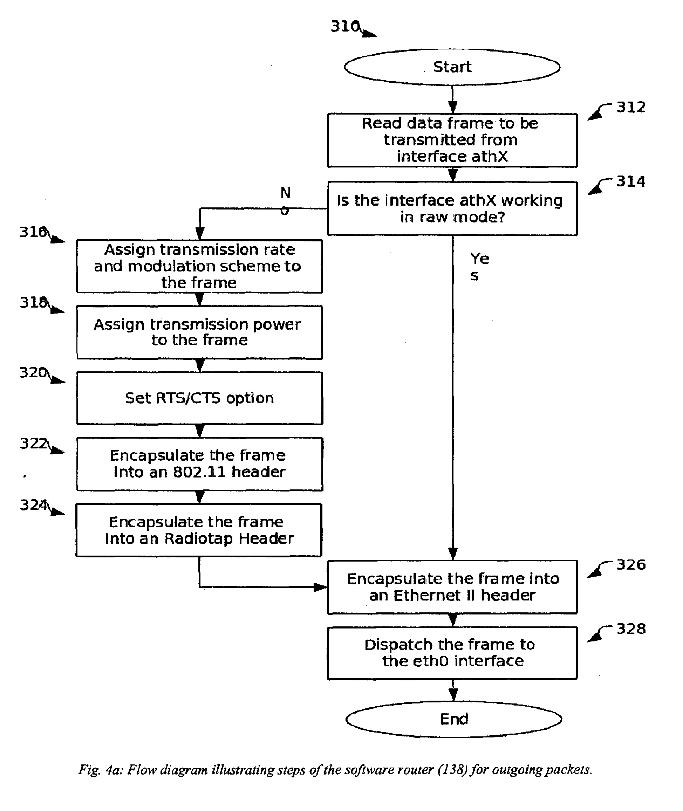

FIG. 4A is a flow diagram illustrating steps of the Software Router 138 in FIG. 5 for outgoing traffic. Referring to FIG. 4A, there is shown a flow diagram *310*. After the start step *312*, the software router waits for outgoing data frames arriving from the network layer. Frames are then read from the incoming interface athN (*140*). If the interface is configured in raw mode, then outgoing frames are encapsulated into an Ethernet II header (326) and then dispatched to the eth0 (140) interface (328). If the interface is not configured in raw mode, the software router selects the transmission rate and the modulation scheme (316), selects the transmission power (318), decide if the RTS/CTS procedure must be used (320), encapsulate the frame into an 802.11 header (324) and then into a Radiotap Header (326) and the deliver the resulting frame to the block 326.

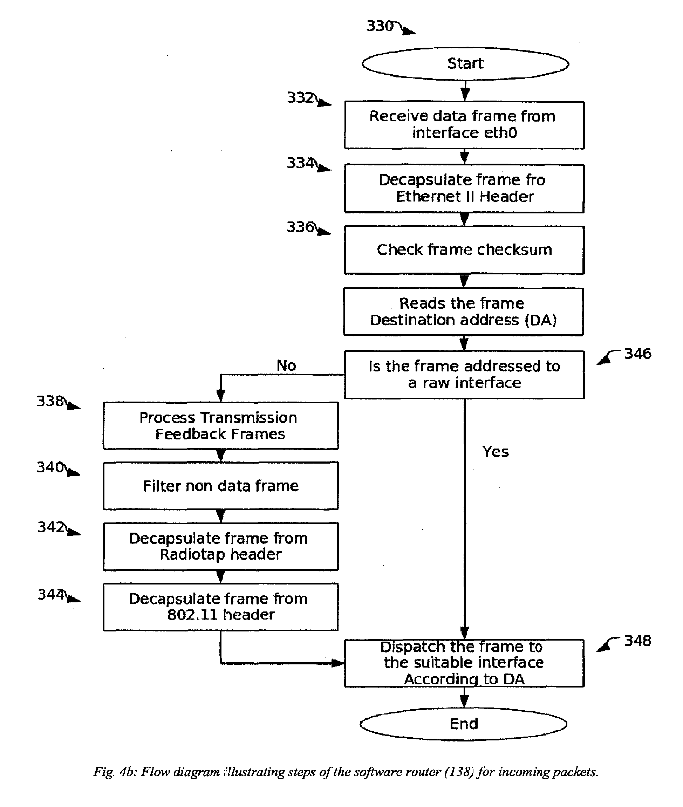

FIG. 4B is a flow diagram illustrating steps of the Software Router 138 in FIG. 5 for incoming traffic. Referring to FIG. 4B, there is shown a flow diagram *330*. After the start step *332*, the software router waits for incoming data frame arriving from the interface eth0 (332). The router then decapsulate the frame from the Ethernet II header (324), and checks if the frame is corrupted (326). The software router reads the frame's destinations address. If the interface to which this frame is addressed is configured in raw mode, then the frame is dispatched to the suitable athN interface (348). Otherwise, the software router processes the transmission feedback information (338), discards non data frames (340), Decapsulate the frame from the radio tap header (342) and from the 802.11 header (344). The resulting frame is the dispatched to block 348.

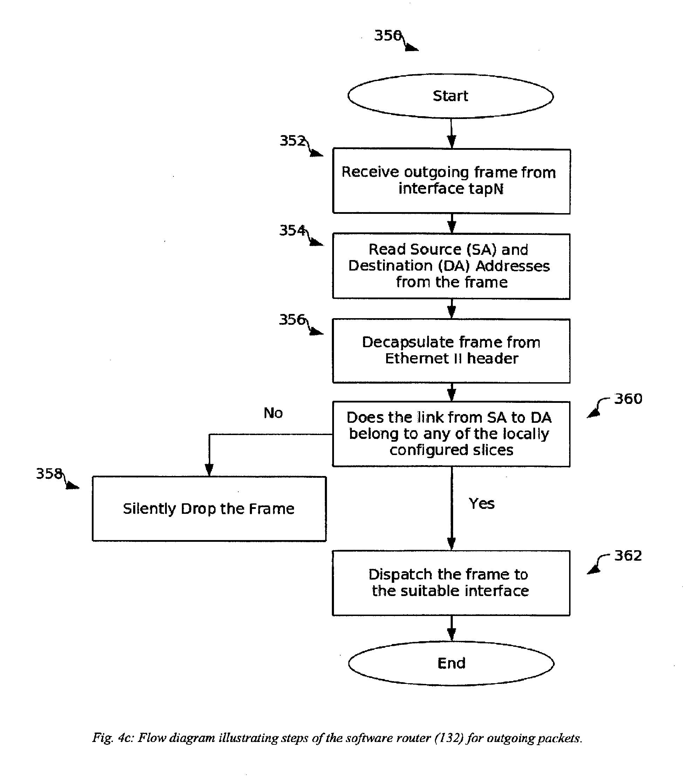

FIG. 4C is a flow diagram illustrating steps of the Software Router 132 in FIG. 5 for outgoing traffic. Referring to FIG. 3C, there is shown a flow diagram *350*. After the start step *352*, the software router receives outgoing frames (352) from interface tapN (136 in FIG 5). The software router then reads the source (SA) and the destination (DA) addresses from the Ethernet II header (354) and decapsulate the frame from the Ethernet II header (356). The software router queries the link broker (134 in FIG 1) for the link going from DA to SA. If the link is available in the link broker cache, then the frame is dispatched to the suitable interface (362); otherwise the link is silently dropped and no further actions are taken (358).

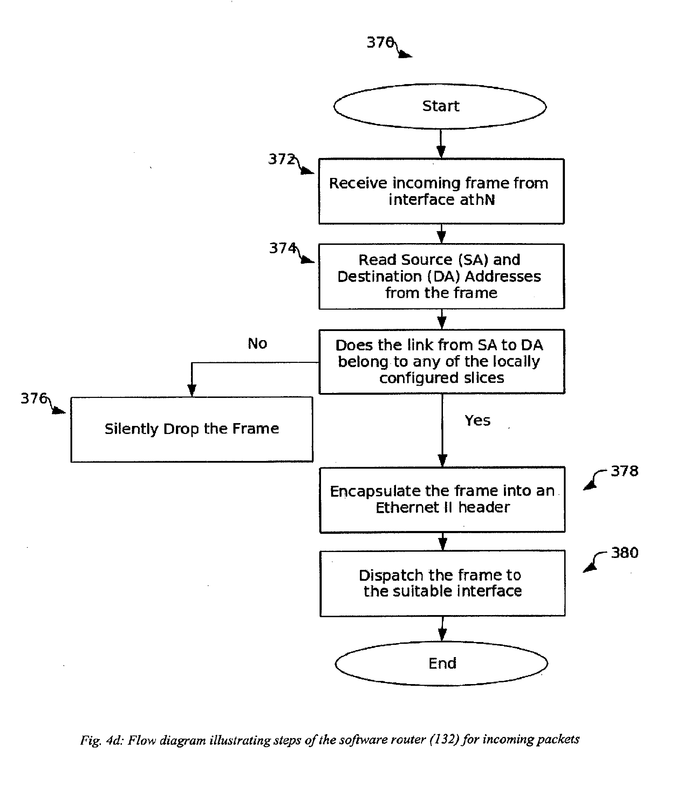

FIG. 4D is a flow diagram illustrating steps of the Software Router 132 in FIG. 5 for incoming traffic. Referring to FIG. 4D, there is shown a flow diagram *370*. After the start step *372*, the software receive the incoming frame (372) from the interface athN (144). The software router then reads the source (SA) and the destination (DA) addresses from the frame. The software router queries the link broker (134 in FIG 5) for the link going from DA to SA. If the link is available in the link broker cache, then the frame is encapsulated into an Ethernet II header (378) and dispatched to the suitable interface (380); otherwise the link is silently dropped and no further actions are taken (376).

In order to demonstrate the effectiveness of this invention in preserving production traffic in challenging conditions, the following experimental scenario has been set up: two wireless nodes, each one running three slivers, shares the same wireless link. Changes in link quality are emulated by progressively moving the two nodes apart in order to simulate deteriorating channel quality conditions. A continuous UDP flow is generated among the two nodes; its rate is such that the wireless link is always saturated.

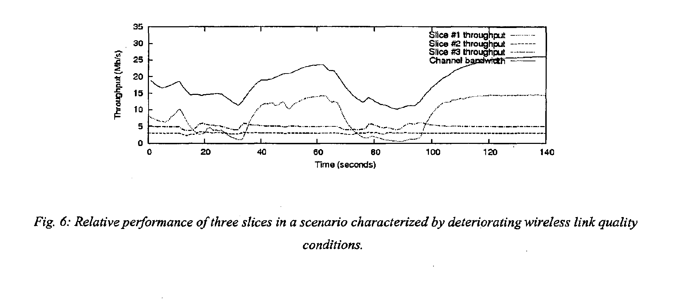

Two privileged slices (#1 and #2) are defined. Both slices have an higher transmission priority than the third slices and a minimum guaranteed outbound bandwidth set to 5 and 3 Mb/s respectively. The third slice has no guaranteed bandwidth (this simulates a WISP having slice #1 for production traffic and the remaining slices #2 and #3 for, respectively, testing a novel video-streaming service and for network management and monitoring). The results plotted in Fig. 6 show the throughput figures per-slice in different conditions of available wireless link capacity. As it can be seen, this invention guarantees that the throughputs of Slice #1 and #2 are only slightly affected by wireless link conditions to detriment of Slice #3, solving in this way the problem of effective virtualization in multi-hop wireless environment.

### References

1. N. M. K. Chowdhury and R. Boutaba, "Network Virtualization: State of the Art and Research Challenges," IEEE Communications Magazine, July 2009.
2. "Technical Document on Overview Wireless, Mobile and Sensor Networks," The GENI Project Office, Tech. Rep. GDD-06-14, 2006.
3. Planet Lab project, http://www.planet-lab.org.
4. VINI project, http://www.vini-veritas.net.
5. German-Lab project, http://www.german-lab.de/.
6. G. Smith, A. Chaturvedi, A. Mishra, and S. Banerjee, "Wireless Virtualization on Commodity 802.11 Hardware," in Proc. of ACM WinTECH, Montreal, Quebec, Canada, 2007.
7. R. Mahindra, G. Bhanage, G. Hadjichristo, I. Seskar, D. Raychaudhuri, and Y. Zhang, "Space Versus Time Separation for wireless virtualization On an Indoor Grid," in Proc. of EURO NGI, Krakow, Poland, 2008.
8. FEDERICA project, http://www.fp7-federica.eu.
9. AKARI project, http://akari-project.nict.go.jp.
10. GENI project, http://www.geni.net.
11. Linux Wireless, http://linuxwireless.org/.
12. OpenVZ, http://openvz.org/.
13. E. Kohler, R. Morris, B. Chen, J. Jannotti, and M. F. Kaashoek, "The Click modular router," ACM Transaction on Computer System, vol. 18, no. 3, pp. 263 - 297, Aug. 2000.
14. A. Nakao, R. Ozaki, and Y. Nishida, "Corelab: An emerging network testbed employing hosted virtual machine monitor," in Proc. of ACM ROADS, Madrid, Spain, 2008.
15. HTB Scheduler for Linux, http://luxik.cdi.cz/~devik/qos/htb/

## Claims

1. A method for providing a wireless network virtualization comprising:
- using a bandwidth partitioner (128) for distributing available bandwidth among virtual nodes
- using a software router (138) for providing each virtual node with a set of virtual interfaces, implemented as TAP devices,
**characterized in that** the host software router (138) process by receiving an incoming frame dispatches it to the suitable device according to a set of policies maintained by a Link Broker (134) and the bandwidth partitioner (128), so that the Link Broker (134) module adaptively provides complete radio isolation among network slices co-existing on the same physical infrastructure and data frames are dispatched to the suitable virtual node.

2. The method of claim 1 wherein data frames are dispatched also from said virtual node to the suitable interface on the physical infrastructure.

3. The method of claim 2, wherein the network is a multi-hop network.

4. The method of claim 3 wherein the bandwidth partitioner (128) acquires wireless channel statistics from wireless NIC and updates the bandwidth assigned to each class of the Link Broker (134)

5. The method of claim 4 wherein the packet transmission is assigned to a link scheduler class linked to a virtual node depending on the bandwidth assigned by said bandwidth partitioner (128).

6. The method of claim 5 wherein a further software router (138) selects the transmission rate, the modulation scheme, the transmission power and the usage of RTS/CTS procedure to deliver the data-frame.

7. The method of claim 6 wherein said Link Broker (134) module further defines different connectivity graphs for different network slices on the basis of pre-required policies.

8. The method of claim 7 wherein the nodes of said connectivity graphs for different network slices are not physically separated.

9. The method of claim 8 wherein the distribution of available bandwidth among virtual nodes is realized according to the actual wireless channel conditions and a set of user-defined policies.

10. The method of claim 9 wherein said tap protocol drives the underlying physical adapter in case a standard IEEE 802.11 device, working in either Station or Master mode, is exposed to one or more of the guests operating system.

11. A computer readable medium storing thereon computer readable instructions for executing the steps of any of the methods of claims 1-10, when executed on a computer.

12. A system for providing a wireless network virtualization according to the method of claim 1 comprising:
- a bandwidth partitioner (128) for distributing available bandwidth among virtual nodes
- a software router (138) for providing each virtual node with a set of virtual interfaces, implemented as TAP devices,
**characterized in that** it further comprises a Link Broker (134) for adaptively providing complete radio isolation among network slices co-existing on the same physical infrastructure.

13. The system of claim 12 wherein the bandwidth partitioner (128) acquires wireless channel statistics from wireless NIC and updates the bandwidth assigned to each class of the Link Broker (134) the packet transmission is assigned to a link scheduler class linked to a virtual node depending on the bandwidth assigned by said bandwidth partitioner (128)
a router selects the transmission rate, the modulation scheme, the transmission power and the usage of RTS/CTS procedure to deliver the data-frame.

14. The system of claim 13 wherein said Link Broker (134) further defines different connectivity graphs for different network slices on the basis of pre-required policies.

15. The system of claim 14 wherein the distribution of available bandwidth among virtual nodes is realized according to the actual wireless channel conditions and a set of user-defined policies and wherein said tap protocol drives the underlying physical adapter in case a standard IEEE 802.11 device, working in either Station or Master mode, is exposed to one or more of the guests operating system.

## Patentansprüche

1. Verfahren zum Bereitstellen einer Virtualisierung eines drahtlosen Netzes, wobei das Verfahren umfasst:
- Verwenden eines Bandbreitenpartitionierers (128) zum Verteilen der verfügbaren Bandbreite auf virtuelle Knoten,
- Verwenden eines Software-Routers (138), um für jeden virtuellen Knoten eine Menge virtueller Schnittstellen, die als TAP-Vorrichtungen implementiert werden, bereitzustellen,
**dadurch gekennzeichnet, dass** der Prozess des Host-Software-Routers (138) durch Empfangen eines ankommenden Rahmens diesen in Übereinstimmung mit einer Menge von Richtlinien, die durch einen Übertragungsstreckenvermittler (134) und durch den Bandbreitenpartitionierer (128) unterhalten werden, so an die geeignete Vorrichtung absendet, dass das Modul des Übertragungsstreckenvermittlers (134) zwischen Netz-Slices, die in derselben physikalischen Infrastruktur koexistieren, adaptiv eine vollständige Funkisolation bereitstellt und Datenrahmen an den geeigneten virtuellen Knoten abgesendet werden.

2. Verfahren gemäß Anspruch 1, wobei ebenfalls Datenrahmen von dem genannten virtuellen Knoten an die geeignete Schnittstelle in der physikalischen Infrastruktur abgesendet werden.

3. Verfahren gemäß Anspruch 2, wobei das Netz ein Mehrsprungnetz ist.

4. Verfahren gemäß Anspruch 3, wobei der Bandbreitenpartitionierer (128) von einer drahtlosen NIC Statistiken über drahtlose Kanäle erfasst und die jeder Klasse des Übertragungsstreckenvermittlers (134) zugewiesene Bandbreite aktualisiert.

5. Verfahren gemäß Anspruch 4, wobei die Paketübertragung einer mit einem virtuellen Knoten verknüpften Übertragungsstreckenplanerklasse in Abhängigkeit von der durch den genannten Bandbreitenpartitionierer (128) zugewiesenen Bandbreite zugewiesen wird.

6. Verfahren gemäß Anspruch 5, wobei ein weiterer Software-Router (138) die Übertragungsrate, das Modulationsschema, die Sendeleistung und die Nutzung einer RTS/CTS-Prozedur zum Liefern des Datenrahmens auswählt.

7. Verfahren gemäß Anspruch 6, wobei das genannte Modul des Übertragungsstreckenvermittlers (134) ferner für unterschiedliche Netz-Slices auf der Grundlage im Voraus angeforderter Richtlinien unterschiedliche Konnektivitätsgraphen definiert.

8. Verfahren gemäß Anspruch 7, wobei die Knoten der genannten Konnektivitätsgraphen für unterschiedliche Netz-Slices nicht physikalisch getrennt sind.

9. Verfahren gemäß Anspruch 8, wobei die Verteilung der verfügbaren Bandbreite auf virtuelle Knoten in Übereinstimmung mit den tatsächlichen Bedingungen drahtloser Kanäle und mit einem Satz nutzerdefinierter Richtlinien verwirklicht wird.

10. Verfahren gemäß Anspruch 9, wobei das genannte tap-Protokoll den zugrundeliegenden physikalischen Adapter ansteuert, falls eine Vorrichtung gemäß der Norm IEEE 802.11, die entweder in der Stations- oder in der Master-Betriebsart arbeitet, einem oder mehreren der Gastbetriebssysteme ausgesetzt wird.

11. Computerlesbares Medium, auf dem computerlesbare Anweisungen gespeichert sind, um die Schritte eines der Verfahren gemäß den Ansprüchen 1-10 auszuführen, wenn sie auf einem Computer ausgeführt werden.

12. System zum Bereitstellen einer Virtualisierung eines drahtlosen Netzes in Übereinstimmung mit dem Verfahren gemäß Anspruch 1, wobei das System umfasst:
- einen Bandbreitenpartitionierer (128) zum Verteilen der verfügbaren Bandbreite auf virtuelle Knoten,
- einen Software-Router (138), um für jeden virtuellen Knoten einen Satz virtueller Schnittstellen bereitzustellen, die als TAP-Vorrichtungen implementiert sind,
**dadurch gekennzeichnet, dass** es ferner einen Übertragungsstreckenvermittler (134) zum adaptiven Bereitstellen einer vollständigen Funkisolation zwischen Netz-Slices, die in derselben physikalischen Infrastruktur koexistieren, umfasst.

13. System gemäß Anspruch 12, wobei der Bandbreitenpartitionierer (128) von einer drahtlosen NIC Statistiken über drahtlose Kanäle erfasst und die jeder Klasse des Übertragungsstreckenvermittlers (134) zugewiesene Bandbreite aktualisiert, wobei die Paketübertragung einer mit einem virtuellen Knoten verknüpften Übertragungsstreckenplanerklasse in Abhängigkeit von der durch den genannten Bandbreitenpartitionierer (128) zugewiesenen Bandbreite zugewiesen wird,
wobei ein Router die Übertragungsrate, das Modulationsschema, die Sendeleistung und die Nutzung der RST/CTS-Prozedur zum Liefern des Datenrahmens auswählt.

14. System gemäß Anspruch 13, wobei der genannte Übertragungsstreckenvermittler (134) ferner für unterschiedliche Netz-Slices auf der Grundlage im Voraus angeforderter Richtlinien unterschiedliche Konnektivitätsgraphen definiert.

15. System gemäß Anspruch 14, wobei die Verteilung der verfügbaren Bandbreite auf virtuelle Knoten in Übereinstimmung mit den tatsächlichen Bedingungen drahtloser Kanäle und mit einem Satz nutzerdefinierter Richtlinien verwirklicht wird und wobei das genannte tap-Protokoll den zugrundeliegenden physikalischen Adapter ansteuert, falls eine Vorrichtung gemäß der Norm IEEE 802.11, die entweder in einer Stations- oder in einer Master-Betriebsart arbeitet, einem oder mehreren der Gastbetriebssysteme ausgesetzt ist.

## Revendications

1. Procédé pour fournir une virtualisation de réseau sans fil comprenant :
- l'utilisation d'un diviseur de largeur de bande (128) pour répartir une largeur de bande disponible entre des noeuds virtuels
- l'utilisation d'un routeur logiciel (138) pour fournir à chaque noeud virtuel un ensemble d'interfaces virtuelles, mises en oeuvre comme des dispositifs TAP,
**caractérisé en ce que** le processus de routeur logiciel hôte (138), à la réception d'une trame entrante, l'envoie au dispositif approprié en fonction d'un ensemble de politiques maintenues par un courtier de lien réseau (134) et le diviseur de largeur de bande (128), de manière que le module de courtier de lien réseau (134) fournisse de manière adaptative une isolation radio complète entre des tranches de réseau coexistant sur la même infrastructure physique et des trames de données soient envoyées au noeud virtuel approprié.

2. Procédé selon la revendication 1, dans lequel des trames de données sont envoyées également à partir dudit noeud virtuel à l'interface appropriée sur l'infrastructure physique.

3. Procédé selon la revendication 2, dans lequel le réseau est un réseau à bonds multiples.

4. Procédé selon la revendication 3, dans lequel le diviseur de largeur de bande (128) acquiert des statistiques de canal sans fil à partir d'une carte d'interface réseau sans fil et actualise la largeur de bande attribuée à chaque classe du courtier de lien réseau (134).

5. Procédé selon la revendication 4, dans lequel une classe de planificateur de liaison liée à un noeud virtuel est assignée à la transmission de paquets, en fonction de la largeur de bande attribuée par ledit diviseur de largeur de bande (128).

6. Procédé selon la revendication 5, dans lequel un autre routeur logiciel (138) sélectionne le débit de transmission, le schéma de modulation, la puissance de transmission et l'utilisation d'une procédure RTS/CTS pour distribuer la trame de données.

7. Procédé selon la revendication 6, dans lequel ledit module de courtier de lien réseau (134) définit en outre des graphiques de connectivité différents pour des tranches de réseau différentes sur la base de politiques préalablement requises.

8. Procédé selon la revendication 7, dans lequel les noeuds desdits graphiques de connectivité pour des tranches de réseau différentes ne sont pas séparés physiquement.

9. Procédé selon la revendication 8, dans lequel la répartition de largeur de bande disponible entre des noeuds virtuels est réalisée en fonction des conditions réelles de canal sans fil et d'un ensemble de politiques définies par l'utilisateur.

10. Procédé selon la revendication 9, dans lequel ledit protocole TAP commande l'adaptateur physique sous-jacent dans le cas où un dispositif de standard IEEE 802.11, fonctionnant en mode Station ou Maître, est exposé à un ou plusieurs des hôtes utilisant le système.

11. Support lisible par ordinateur stockant sur celui-ci des instructions lisibles par ordinateur pour exécuter les étapes de l'un quelconque des procédés selon les revendications 1 à 10, quand elles sont exécutées sur un ordinateur.

12. Système pour fournir une virtualisation de réseau sans fil selon le procédé de la revendication 1, comprenant :
- un diviseur de largeur de bande (128) pour répartir une largeur de bande disponible entre des noeuds virtuels
- un routeur logiciel (138) pour fournir à chaque noeud virtuel un ensemble d'interfaces virtuelles, mises en oeuvre comme des dispositifs TAP,
**caractérisé en ce qu'**il comprend en outre un courtier de lien réseau (134) pour fournir de manière adaptative une isolation radio complète entre des tranches de réseau coexistant sur la même infrastructure physique.

13. Système selon la revendication 12, dans lequel le diviseur de largeur de bande (128) acquiert des statistiques de canal sans fil à partir d'une carte d'interface réseau sans fil et actualise la largeur de bande attribuée à chaque classe du courtier de lien réseau (134),
une classe de planificateur de liaison liée à un noeud virtuel est assignée à la transmission de paquets, en fonction de la largeur de bande attribuée par ledit diviseur de largeur de bande (128),
un routeur sélectionne le débit de transmission, le schéma de modulation, la puissance de transmission et l'utilisation d'une procédure RTS/CTS pour distribuer la trame de données.

14. Système selon la revendication 13, dans lequel ledit courtier de lien réseau (134) définit en outre des graphiques de connectivité différents pour des tranches de réseau différentes sur la base de politiques préalablement requises.

15. Système selon la revendication 14, dans lequel la distribution de largeur de bande disponible entre des noeuds virtuels est réalisée en fonction des conditions réelles de canal sans fil et d'un ensemble de politiques définies par l'utilisateur et dans lequel ledit protocole TAP commande l'adaptateur physique sous-jacent dans le cas où un dispositif de standard IEEE 802.11, fonctionnant en mode Station ou Maître, est exposé à un ou plusieurs des hôtes utilisant le système.
